Europäisches Patentamt

(19) European Patent Office   (11) Publication number: **0 221 143**
Office européen des brevets   **B1**

## EUROPEAN PATENT SPECIFICATION

(12)

(45) Date of publication of the patent specification:   (51) Int. Cl.⁴: **F 16 B  19/05** // F 16 B 41/00
27.09.89

(21) Application number: **86903028.8**

(22) Date of filing: **24.04.86**

(86) International application number:
**PCT/US  86/00869**

(87) International publication number:
**WO  86/06448  (06.11.86** Gazette 86/24)

(54) **VARIABLE CLAMP FASTENER AND METHOD OF USING SAME FOR SECURING WORKPIECES TOGETHER.**

(30) Priority: **29.04.85  US 728055**

(43) Date of publication of application:
**13.05.87 Bulletin 87/20**

(45) Publication of the grant of the patent:
**27.09.89 Bulletin 89/39**

(84) Designated Contracting States:
**AT BE CH DE FR GB IT LI NL SE**

(56) References cited:
**US-A- 3 295 404**
**US-A- 3 367 228**
**US-A- 3 421 562**

(73) Proprietor: **HUCK MANUFACTURING COMPANY, 6
Thomas P.O. Box 19590, Irvine, CA 92713 (US)**

(72) Inventor: **DIXON, Richard, Daniel, 31241 Calle Del
Campo, San Juan Capistrano, CA 92675 (US)**

(74) Representative: **Baillie, Iain Cameron et al, c/o Ladas &
Parry Isartorplatz 5, D-8000 München 2 (DE)**

Note: Within nine months from the publication of the mention of the grant of the European patent, any person may give notice to
the European Patent Office of opposition to the European patent granted. Notice of opposition shall be filed in a written reasoned
statement. It shall not be deemed to have been filed until the opposition fee has been paid (Art. 99(1) European patent
convention).

## Description

The present invention relates to two-piece fasteners and more particularly to swage type fasteners having a variable clamp capability and to a method for securing workpieces.

The present invention generally relates to two-piece swage type fasteners or lockbolts of the type illustrated in U.S. Patents Nos. 3 915 053, 2 531 048 and 4 472 096.

In many commercial applications, two-piece threaded fasteners are used and are installed in two or more steps. Thus it is common to secure a structure first by attaching the associated members with the fasteners loosely engaged. This facilitates adjustment and/or alignment of the structural members to a final, desired orientation. Next the fasteners are tightened to a preselected final torque. A traditional problem with torque applied to thread fasteners is that the clamp force attained is generally unpredictable due to frictional and other factors i.e. friction between nut and engaged workpiece surface, friction in the engaging threads, etc. Two-piece swage type fasteners, however, are not confronted with such frictional problems and hence can provide for uniformly predictable clamp loads. However, the swage type fasteners have not been capable of providing the initial variable clamp up available with threaded fasteners and still provide a full clamp with only a second, final installation step. Prior threaded swage and/or crimp type fasteners would require extra steps or complex tooling. For example, a threaded crimp type fastener would not provide the same flexibility without complex installation tools; see for example the U.S. Patent No. 3 421 562. While the latter fastener would permit an initial variable clamp load similar to a conventional threaded fastener, the final installation would require either two additional steps of final torquing and crimping or a complex tool capable of performing the latter steps in sequence.

The object of the present invention is to overcome the foregoing problems.

Accordingly, the present invention provides a fastening arrangement including a fastener for securing workpieces together with a selectively variable clamp with said fastener adapted to be finally installed via a relative axial force applied by an installation tool, said fastener comprising a pin member having an elongated shank terminating at one end in an enlarged pin head, a lock groove portion on said shank including a plurality of helically extending lock grooves defining a thread form, a tubular collar adapted to be located on said pin shank and to be swaged into said lock grooves in response to a first preselected magnitude of said relative axial force applicable by the installation tool, said collar having a through bore of a diameter to generally receive said lock grooves in clearance relationship, said collar having a limited female thread formed on said through bore and adapted to threadably engage said thread form defined by said lock grooves, whereby said collar can be torqued onto said lock groove portion to selectively clamp or locate the workpieces relative to each other more or less, said limited collar thread having a preselected strength selected to deform out of said lock grooves in response to a second preselected magnitude of relative axial force applied between said pin member and said collar by the installation tool with said second preselected magnitude being less than said first preselected magnitude.

The present invention also provides method for securing workpieces together with a selectively variable clamp comprising the steps of forming a pin member to have an elongated shank terminating at one end in an enlarged pin head, said shank formed to have a lock groove portion including a plurality of helically extending lock grooves defining a thread form, forming a tubular collar to have a through bore of a diameter to generally receive said lock grooves in clearance relationship, said collar formed with a limited female thread in said through bore and adapted to threadably engage said thread form defined by said lock grooves, said collar formed to be swaged into said lock grooves in response to a first preselected magnitude of said relative axial force applicable by an installation tool, threadably applying said collar onto said lock groove portion to selectively clamp or locate the workpieces relative to each other more or less, said limited collar thread formed to have a preselected strength selected to deform out of said lock grooves in response to a second preselected magnitude of relative axial force applied between said pin and said collar by the installation tool with said second preselected magnitude being less than said first preselected magnitude, and applying said second preselected magnitude and said first preselected magnitude of relative axial force, in a substantially immediate sequence, to said pin and said collar to first deform said limited collar thread out of said lock grooves, to secondly clamp the workpieces together under a predetermined clamp load and thirdly to swage said collar into said lock grooves.

In the preferred form of the present invention the lock grooves of the pin are in the form of a helical male thread. The collar is provided with a mating, female thread of a preselected extent such that the initial clamp can be accommodated. However, the female collar thread is selected to be of a limited circumferential extent and shear strength such that the collar can be brought to its final, desired clamp position and swaged to the pin via a conventional installation tool. Thus for the final installation, a conventional pull tool can be used to apply a relative axial force between the pin and the collar. The female collar thread is selected such that, in response to the relative axial force and at a level prior to the initiation of collar deformation or swaging into the lock grooves of the pin, it will shear or deform such that the collar will be free to move axially over the pin and to respond to the installation loads in the same manner as a collar without such limited female thread form. Now the workpieces can be finally clamped together with the same effectiveness as swage type fasteners.

In the preferred form of the present invention, the collar is adapted to be swaged into the lock grooves in the pin. The lock grooves in the pin, unlike the lock grooves of the prior art noted, are preferably very shallow and are constructed to have roots of a simulated streamlined shape. As noted the lock grooves are helical and define a desired thread configuration. The shallow grooves and simulated streamlined shape, however, provide a resultant fatigue life which is superior to that of a comparable threaded fastener. At the same time the collar is provided with a predetermined wall thickness, and hence volume, not only to provide an over fill condition of the lock grooves during swaging but also to provide a retained clamp having a magnitude which is a high percentage of the installation load and of the yield strength of the pin in tension across the lock grooves. Thus the collar wall thickness is selected to enhance the retained clamp and to provide sufficient hoop stiffness to inhibit spring back of the collar material out of the shallow lock grooves in the pin. The subject fastener will also provide clamp loads which are significantly higher than those achievable with a threaded, solely torqued counterpart because of the absence of the applied torque (and resultant friction) required for the threaded system.

In the preferred form of the present invention, a relatively high strength pin is used which will not fail across the engaged grooves at the lower magnitudes of applied tensile loads. Thus, with a given pin, the magnitude of available design tensile load can be increased or decreased simply by varying the length of the collar and hence varying the number of pin and collar shoulders that are supporting the tensile load. This selective variation can occur until the appropriate number of engaged shoulders are provided whereby failure under tensile loading will occur as a tensile failure diametrically across the pin.

In one form of the present invention, the resultant preload applied to the pin is slightly below that load at which yielding would occur in the pin lock grooves. The collar is slightly longer than that required to provide engagement of the appropriate number of pin and collar shoulders to hold that preload; in this case the failure at the design tensile load will be in shear across the collar and/or pin shoulders. By simply increasing the length of the collar the number of engaged shoulders will be increased whereby failure will occur at a higher tensile load in tension diametrically across the pin lock grooves. In either event, the result will be a retained preload of a high magnitude on the fastened joint.

Note that when the high preload levels are considered in conjunction with the advantages of the helical lock grooves which are considerably shallower than the threads or grooves in a comparable conventional, threaded system, the attainable improvement in fatigue and retained stress is even more significant. Some additional gains are secured over an annular groove of a shallow structure with the tensile strength and fatigue life of the pin being somewhat greater since the helical shape will provide a greater diametrical lock groove dimension than the shallow annular groove. Conversely, however, equivalent values could be secured between the helical and annular shallow groove constructions by a slight reduction in the effective cross-sectional area of the threaded construction.

Thus, the fastener of the present invention will not only provide significantly improved fatigue characteristics but will also provide a very high clamp load. In one form of the invention the fastener can provide a tensile load carrying capacity up to the tensile strength of the pin across the helical lock grooves which, because of the shallow grooved structure, will be of a maximized magnitude relative to the pin diameter.

At the same time, however, the unique collar and pin combination will permit the desired variable clamp load such that the structural components can be pre-assembled under one load and quickly and efficiently fastened together under high, final clamp loads in a second fastening operation.

It should be noted that the pin can be of a high strength such that there will be no significant yielding in response to the final swage load. The utilization of the desirable shallow groove construction is a significant factor in resisting such yielding. The latter feature is desirable in the present invention where the pin has a helical thread form. Now when the collar is finally swaged into the helical pin grooves, a complementary female thread will be formed in the collar. If the helical thread form of the pin lock grooves are distorted during collar swage, then they will not subsequently function effectively as a threaded fastener with the swaged collar. With the shallow grooved, high strength pin of one form of the present invention such distortion is inhibited. Now the integrity of the thread form is maintained and the swaged collar can be removed by a suitable wrenching tool.

While in one form of the invention the final installation of the fastener can be accomplished with a conventional pull tool, in another form a stump type version of the fastener could be utilized with the final installation effectuated by a squeeze type tool.

Other features and advantages of the present invention will become apparent from the subsequent description, taken in conjunction with the accompanying drawings, in which:

Figure 1 is a longitudinal view with some portions shown in section and others shown broken away of a fastener of the present invention in assembly relationship with workpieces and with a portion of a tool shown as applied to the fastener prior to final installation;

Figure 2 is a view similar to that of Figure 1 showing the fastener after it has been set;

Figure 3 is a fragmentary view of a pin similar to that of Figure 1 showing a different form of lock section;

Figure 4 is a fragmentary pictorial view of a pin head similar to that of the pin of Figure 1 but having a smooth exterior;

Figure 5 is a fragmentary pictorial view of a pin head having a brazier head style with a smooth exterior;

Figure 6 is a partially broken, pictorial view of the collar of Figures 1 and 2;

Figure 7 is a partially broken, pictorial view of a collar similar to that of Figures 1, 2 and 6 but having a smooth exterior contour;

Figure 8 is a fragmentary sectional view to enlarged scale of the shape of the helical lock groove of the pin of Figures 1 and 2;

Figure 9 is a view similar to that of Figure 1 depicting a stump version of the fastener of Figure 1; and

Figure 10 is a view similar to that of Figure 9 showing the stump version of Figure 9 after it has been set by a squeeze tool.

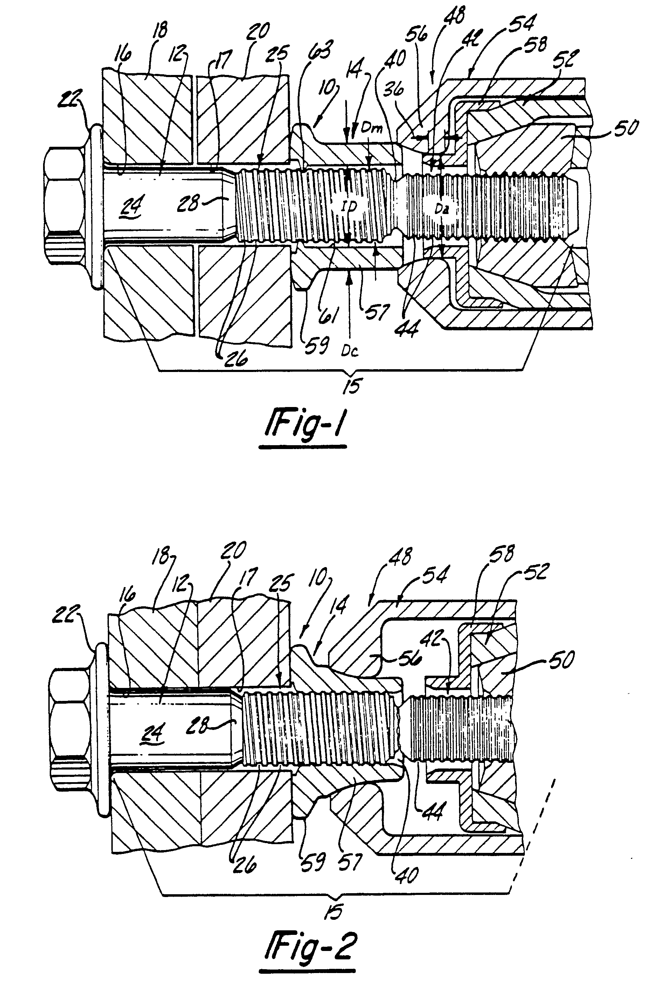

Looking now to Figures 1 and 2, a fastener 10 is shown to include a pin member 12 and tubular collar 14. Pin member 12 has an elongated shank 15 which extends through aligned openings 16 and 17 in a pair of workpieces 18 and 20, respectively, to be secured together. An enlarged protruding head 22 at one end of shank 15 engages one side of workpiece 18. Adjacent the head 22, the shank 15 has a straight portion 24 which is adapted to be received within aligned bores 16 and 17 with a clearance fit. Following the straight portion 24 is a lock groove portion 25 defined by a plurality of grooves 26 having a continuous, helical thread form. A transition portion 28 smoothly connects the locking grooves 26 with straight shank portion 24.

A breakneck groove 40 is located between the lock groove portion 25 and a gripping or pull portion 42 and defines the weakest portion on the shank 15. The pull portion 42 is comprised of a plurality of annular pull grooves 44 which are of a reduced diameter relative to the shank portion 24 and the lock groove portion 25. The pull grooves 44 are adapted to be gripped by a tool 48 which is actuable to set the fastener 10. The tool 48 can be generally constructed in a manner known to those skilled in the art and hence is only partially shown for purposes of simplicity. Briefly, the tool 48 has a plurality of jaws 50 adapted to grip the pin 12 at pull grooves 44. Jaws 50 are located in a tubular collet assembly 52 which is slidably supported in an anvil housing 54 which terminates at one end in a swage anvil portion 56.

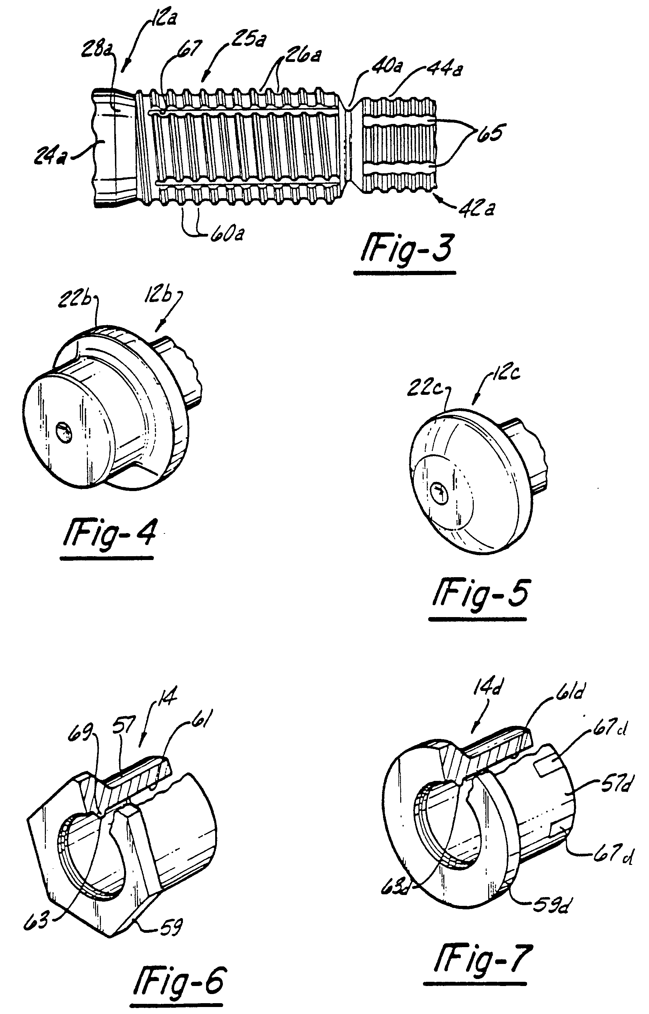

The tubular collar 14 has a generally straight shank portion 57 terminating in an enlarged flange 59. Both the pin head 22 and collar flange 59 are provided with wrenching flats to facilitate gripping by a wrench or other suitable tool for applying a relative torque between the pin member 12 and collar 14 (see Figures 1, 2 and 6). With regard to the latter, the collar 14 has a generally smooth bore 61 of a diameter ID to be in clearance with the pin shank 15; a female thread 63 is formed at the flange end of the bore 61 and is adapted to complementarily, threadably engage the helical lock grooves 26. For a reason to be seen the collar thread 63 is limited and in one form is defined by around a single, 360° thread. The collar 14 is conventionally cold formed and thus the collar thread 63 can be coined or otherwise formed in the collar 14 during such cold forming. As shown in Figure 6, the collar thread 63 is formed in a generally radially inwardly extending shoulder 69 which is defined in part at the flange end of the collar 14 by a counterbore. Thus, the thread 63 is defined by a limited groove portion and a limited shoulder portion. The width of the thread 63 or shoulder portion 69 is substantially the same as the width of the groove or thread 26.

In operation, then, the workpieces 18 and 20 can be first joined together by the threaded engagement between the limited collar thread 63 and the threaded lock grooves 26. The pull portion 42 has a maximum diameter less than the inside diameter of the collar thread 63 so that the collar 14 can be moved onto the pin 12 and collar thread 63 readily applied to the lock groove portion 25. The wreching surfaces on the pin head 22 and collar flange 59 facilitate torquing to a desired magnitude or extent of clamp. As noted, in some applications, it is advantageous to have the workpieces 18 and 20 lightly clamped or even loosely held together to permit an appropriate fit up of the associated structure prior to final installation. After this has been accomplished the installation tool 48 is applied to the fastener 10 and a relative axial force is applied between the pin 12 and collar 14 via the jaw assembly 50 gripping the pull groove portion 42 and the swage anvil 56 engaging the outer end of the collar 14. As the relative axial force increases, the limited collar thread 63 will shear or deform sufficiently to permit the collar 14 to move further axially relative to the pin 12. In this condition, the pin 12 and collar 14 will now act as a swage type fastener; the workpieces 18 and 20 are clamped together at a preselected preload by the relative axial force initially applied between the pin 12 and collar 14 and, as the axial force increases, the collar 14 is swaged into the helical lock groove portion 25. As the axial force continues to increase, a magnitude will be attained at which the pin 12 will fracture at the breakneck groove 40 completing the swaging operation (see Figure 2). Subsequently, upon further actuation of the tool 48, a collar ejector member 58 will be urged forwardly to eject the swaged collar 14 from the anvil 56 thus completing the installation.

Thus, the collar 14 will be swaged into the lock groove portion 25 at a relative axial force of a first preselected magnitude which is greater than the second preselected magnitude of relative axial force at which the limited collar thread 63 is sheared or deformed.

Note that the contour of the swage cavity at the anvil 56 and the contour of the outer end of the collar 14 are such that swaging of the collar 14 into the lock grooves 26 will not start to occur at the lower magnitude of relative axial force required to shear or deform the limited collar thread 63 at the initiation of the swage operation.

As noted, in the past, variable clamping has been accomplished by threaded fasteners by two or more steps of torque application. One problem has been in assuring that all such threaded fasteners have been finally set to the proper torque. To provide such assurance, literally all fasteners or a substantial representative number of such fasteners may have to be individuall inspected via suitable torque indicating devices. With the present invention the fastener 10 is self flagging since the absence of the pin tail portion (after the pin break at the breakneck groove 40) provides an easy visual check that the fastener 10 has been set.

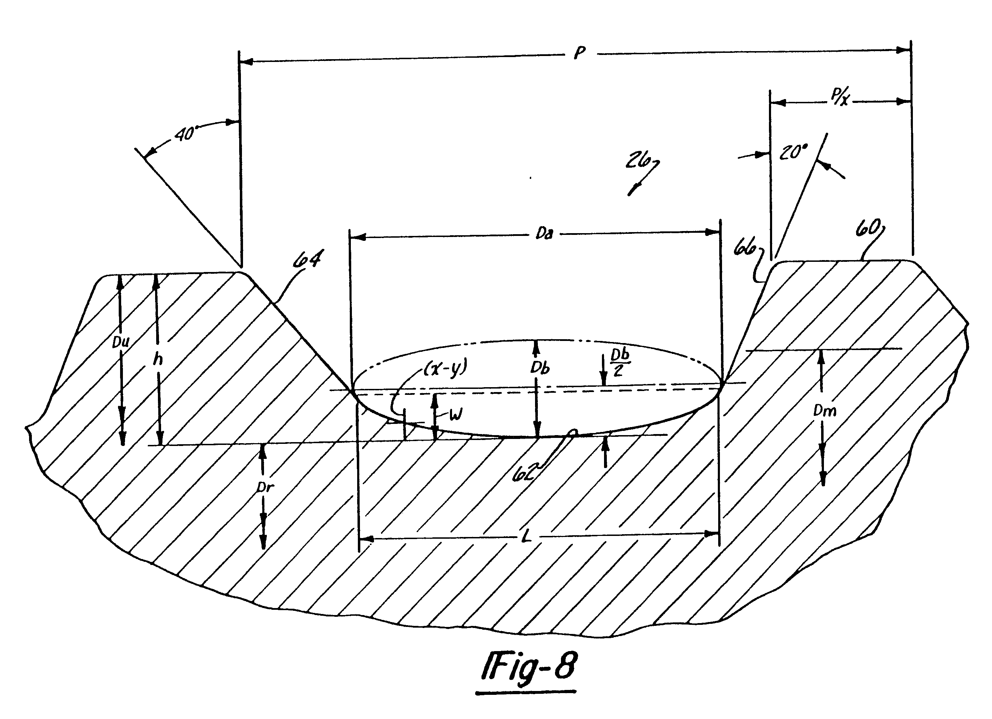

As best can be seen in Figure 8, in one form of the invention, the helical lock grooves 26 are of a shallow construction and have a closely approximated streamlined root configuration. A streamlined contour provides a transition between two different diameters with essentially no stress concentration or an effective stress concentration factor (Kt) of one (1). The helical lock grooves 26, which are separated by annular crests or shoulders 60 can be considered to be defined by a root portion 62, which is connected at one end to a leading transition portion 64 and at the opposite end to a trailing transition portion 66. In order to approximate a streamlined shape as closely as possible, the root portion 62 is generally elliptically shaped and can be generally defined by the relationship:

$$\frac{x^2}{Da^2} + \frac{y^2}{Db^2} = 1,$$

where (x, y) are the coordinates for a point on the root curvature surface. Actually, the elliptical shape simulates two streamlined contours, one from transition portion 64 and the other from transition portion 66. In addition to the above the lock grooves 26 are further defined by the following:

1. P is the pitch between successive helical lock grooves 26;

2. P/X is the width of the shoulders 60 where X is selected to provide proportioned strength between the ultimate shear strengths of the material of collar 14 and the material of pin 12 such that, under tensile load, a failure in shear could occur at the effective shear plane across either the pin shoulders 60 or the resultant shoulders in the swaged collar;

3. h is the depth of helical lock grooves 26;

4. Dr is the effective root diameter of helical lock grooves 26;

5. Du is the crest diameter of pin shoulders 60 (or the diameter defined by the crests of the threaded pin 12);

6. Da is the major axis of the ellipse defining the elliptical root contour of root portion 62;

7. Db is the minor axis of the ellipse defining the elliptical root contour of root portion 62;

8. Db/2 is one half of the minor axis or the distance along the minor axis Db from root portion 62 up to the major axis Da;

9. L is the axial distance between the respective tangential intercepts of the leading transition portion 64 and the trailing transition portion 66 with the ellipse portion defining root portion 62; and

10. W is the radial distance along the minor axis Db from root portion 62 to the axial line defined by the axial length L.

In one form of the invention, the leading transition portion 64 was provided to be at a 40° angle with a plane transverse to the axis of pin 12 while the trailing transition portion 66 was provided to be at a steeper angle of 20°. The angle of the leading portion 64 facilitates flow of the material of collar 14 to swage while the steeper angled trailing portion 66 provides a buttressing effect relative to the swaged collar material. This buttressing effect facilitates clamping of the workpieces 18 and 20 as the collar 14 elongates during swage. The transition portions 64 and 66 tangentially intercept the elliptical root portion 62 whereby a smooth transition in contour is provided. The elliptically shaped root portion 62 has an axial length L which is less than the major diameter Da and a radial width W which is less than the minor axis dimension Db/2. The root portion 62 will always have a length L and width W no greater than the major and minor axes Da and Db, respectively. However, in order to assure a smooth transition with the essentially straight transition portions 64 and 66, generally at the angles of inclination noted, it is desirable that the width W be no less than around 80% of the minor axis dimension Db/2 or 40% of Db.

With the fastener construction of Figures 1-2, it has been found that the depth of the grooves 26 can be selected to provide a desired minimum ratio of depth h to the crest diameter Du of the pin 12. The major criteria of groove depth h is that it be sufficiently deep as a practical matter to receive and retain the material of the collar 14 after swage. A groove depth h of around 0.04 × Du or less is desirable, i.e. (h/Du) × $10^2$ = 4. With such a shallow groove, the root diameter Dr will be maximized for a pin with a given creast diameter Du. This will provide that a pin 12 of a given material will have nearly the maximum tensile strength available since tensile failure would generally occur across the root diameter Dr which, when maximized, is only slightly less than the crest diameter Du. The maximized root diameter Dr will also provide improved fatigue life. Actually since the grooves 26 are helical the tensile failure would occur across some mean diameter Dm between the root diameter Dr and crest diameter Du. Thus, for a pin of a given diameter, the present invention will result in an increase in tensile strength and fatigue life over its conventionally threaded counterpart. At the same time, the groove 26 being shallow will permit the use of the simulated streamlined or elliptical shape at root portion 62 resulting in a significantly reduced stress concentration factor Kt. Again, the result will be an increase in fatigue life over a comparable conventionally threaded fastener.

With a shallow groove construction, it is desirable to provide the collar 14 with a volume such that when swaged into the helical locking grooves 26 it will have an excess volume over that required to fill the grooves 26.

In one embodiment, the volume of collar 14 was selected to provide 'overpacking', i.e., a volume of collar 14 to provide substantially more volume of collar material for filling grooves 26 than they could normally accept within the swage envelope defined by the throat 36 (Figure 1) of the swage cavity of anvil 56 and the confronting portion of pin 12. In the present system, it has been found desirable to provide a volume of collar material which has an excess of at least around 16%. With the shallow helical grooves 26, excess collar volume over the noted 16% is not required since the amount of radial inward movement of collar material is not as great as with prior lock grooves of a deeper construction. The percantage 'overfill' or 'overpacking' noted can be generally determined for a finite length of the effective swage portion of throat 36 by the relationship (see Figure 1):

$$100 \times \frac{[(Dc^2 - ID^2) - (Da^2 - Dm^2)]\, dl}{[Da^2 - Dm^2]\, dl\ 4} = \%\ \text{overfill}$$

where:

Da is the diameter of the throat 36 of anvil 56;

Dc is the outside diameter of the collar 14 before swage;

ID is the inside diameter of the collar 14 before swage;

Dm is the mean diameter of the lock grooves 26; and dl is considered to be a finite length within the swage portion of throat 36.

Because of the shallowness of the lock grooves 26, it is desirable that the pin 12 be hard enough relative to the hardness of the collar 14 to resist crushing or substantial yielding in tension or necking down from the high compressive swage loads. Thus, in one form of the invention, the pin 12 could be made of AISI 4140 alloy steel or AISI 1541 carbon steel having an ultimate shear strength of at least around 95 KSI. The collar 14 could be made of AISI 1035 carbon steel having an ultimate shear strength of at least round 45 KSI. Generally it is desirable to utilize a pin 12 having an ultimate shear strength relative to that of collar 14 in the ratio in a range of around 1.8:1 to around 2.4:1. Thus the pin 12 has a sufficient hardness to accept both the high tensile preloads desired and the swage loads on the collar 14 substantially without yielding. It also should be noted that, from a manufacturing standpoint, the shallow grooves 26 are more easily formed than the prior, deeper lock grooves and, in fact, can be formed after the pin 12 has been hardened.

However, in order to realize the high clamp load, the collar 14 must have a sufficient wall thickness and, hence, volume to insure that enough collar material will move axially in elongation. At the same time it is desirable that the swaged collar have sufficient wall thickness and, hence, have sufficient strength to resist any significant spring back from the shallow lock grooves 26. The collar wall also should have sufficient thickness to resist significant radial expansion under tensile load such that the pin shoulders 60 and collar shoulders remain in substantially full engagement as the design tensile load on the joint is reached. If the collar wall does not provide sufficient radial stiffness, the collar 14 could expand radially under tensile load, reducing the effective shear plane carrying the load. The result could be a premature failure in shear at the tips of the pin shoulder 60 or collar shoulders.

Thus, the collar wall thickness is selected to provide the necessary material to promote swaging into the shallow helical lock grooves 26 and flow in elongation to provide the desired clamp load. At the same time, the collar wall thickness at final swage is also selected to provide sufficient, radial stiffness or hoop strength to resist significant radial spring back from the grooves 26 both during initial swage and also under subsequent tensile loading. Also, the volume of the collar 14 and swage cavity 36 are selected to provide movement of the material of collar 14 into the grooves 26 to assure a good fill. With the above dimensions and an anvil throat portion to provide approximately 16% overfill, satisfactory results were obtained. In this regard an overfill significantly under 16% would not provide the desired high preloads while an overfill significantly over 16% could result in excessive installation loads which could yield the pin 12. For a pin 12 and collar 14 of the ferrous materials having the relative shear strength previously noted, the following dimensional relations in centimeters (in inches) were found satisfactory.

| | Pin Crest Diameter | Depth of Grooves | Collar O.D. Before Swage | Collar I.D. Before Swage | Anvil Throat Diameter | Pin Mean lock groove Diameter |
|---|---|---|---|---|---|---|
| NOM DIA. | Du | h | Dc | ID | Da | Dm |
| 1.27 (1/2) | 1.27 (.500) | .0393 (.0155) | 2.057 (.810) | 1.325 (.522) | 1.912 (.753) | 1.234 (.486) |
| 1.587 (5/8) | 1.587 (.625) | .0050 (.0200) | 2.562 (1.009) | 1.645 (.648) | 2.385 (.939) | 1.536 (.605) |
| 1.905 (3/4) | 1.905 (.750) | .0622 (.0245) | 3.081 (1.213) | 1.988 (.783) | 2.857 (1.125) | 1.841 (.725) |

It is also desirable, that the width of the pin grooves 26 and pin shoulders 60 and the complementary grooves and shoulders of the swaged collar 14 be proportioned in width relative to the respective shear strengths of the materials of pin 12 and collar 14 such that both the shoulders defined by pin grooves 26 of the pin 12 and the shoulders defined by interlocking grooves of the swaged collar 14 are in incipient or simultaneous failure in shear at or above the preselected minimum ultimate design tensile load on workpieces 18 and 20. It is preferred that the design provide for the shoulders defined by the grooves of collar 14 to fail prior to the shoulders defined by pin lock grooves 26, i.e. the shoulders of pin 12 would fail in shear at approximately 110% of the tensile load at which the shoulders of collar 14 would fail. By proportioning the grooves as noted, the engaged length of pin and collar can be minimized for a given tensile load. Of course, by providing sufficient collar length, the above shear strength relationship can be maintained while providing for a tensile failure diametrically across the pin lock groove portion 25.

The application of proportioned strength permits the pin grooves 26 to be elongated relative to the shoulders 60 whereby the use of an approximated, streamlined root shape can be more effectively employed. At the same time the shallow groove structure permits smooth transitions between the root 62 and the connecting sidewalls 64 and 66. While the elliptical contour employed will closely approximate the desired streamlined shape other similar continuous curves could be utilized.

Another advantage of employing proportioned strength as noted is that the shear strength of the limited collar thread 63 can now be maximized permitting the pre-fastened clamp via torquing to be at relatively high magnitude and/or permitting the fastener 10 in its prefastened clamp condition to withstand the necessary loads to hold the structure together during the fit up operation. This is achieved by virtue of the fact that the width of collar thread 63 is substantially the same as the width of the groove of thread 26. By permitting the construction of a thread of such maximum strength, a single 360° thread can be adequate for many applications; this facilitates construction of the collar thread 63 by cold forming obviating the need to form additional threads which could require a separate machine operation.

With the fastener 10 constructed as described, for ferrous materials, the retained preload on the workpieces 18 and 20 after installation will be preferably between around 85% to around 95% of the applied installation load and the applied installation load, as noted, will be approximately at the yield point of pin 12. The installation load is the maximum load applied to the fastener in setting the fastener through pin break at breakneck groove 40. Note that, for ferrous materials, the yield point of pin 12 will be approximately 80% of the minimum design ultimate load of the fastened joint.

With the fastener 10 installed, the swaged collar 14 will have a complementary female thread formed in its bore 61. This will now permit the fastener 10 to be removed by torquing off the collar 14 via suitable tools applied to the wrenching surfaces on the pin head 22 and the collar flange 59. At the same time the collar 14 could, in some circumstances have additional torque applied.

In some constructions, it may be desirable to provide that the swaged collar such as collar 14 will not loosen from vibration, etc. This can be effectively precluded by the addition of antirotation grooves in the pin as shown in Figure 3. Thus in the embodiment of Figure 3, the pin 12a has a plurality of axially extending grooves 67 in the threaded lock groove portion 25a such that when the collar (such as collar 14) is swaged thereon, collar material will flow into the axial grooves 67 precluding relative rotation between the pin 12a and associated swaged collar. The remainder of pin 12a is similar to pin 12 and hence similar portions have been given the same numeral designation with the addition of the letter postscript «a».

In some applications it may be desirable to inhibit removal of the swaged collar. Thus Figures 4 and 5 show two exemplary styles of pin heads 22b and 22c for pins 12b and 12c, respectively. The pin head 22b of Figure 4 is similar to that of pin head 22 of Figures 1 and 2 except that the wrenching flats have been removed whereby a smooth outer contour is provided. The pin head 22c of Figure 5 is a conventional brazier type head having a smooth outer contour absent any wrenching flats. In all other respects the pins 12b and 12c are the same as the pin 12 of Figures 1 and 2.

In Figure 7 a collar 14d is shown which is similar to collar 14 of Figures 1 and 2 except that the collar flange 59d is smooth and absent any wrenching flats. Other portions of collar 14d similar to portions of collar 14 have been given the same numeral designation with the addition letter postscript «d».

A fastener utilizing a combination of the smooth head styles of pin heads 22b and 22c, the smooth flanged collar of 14d and the antirotation pin 12a will provide an effective combination for inhibiting removal. However, to facilitate installation of the smooth collar 14d onto the threaded lock groove portion 26a where a smooth style pin head 22b or 22c is utilized a plurality of flats 65 can be provided on the pull groove portion 42a of pin 12a and flats 67d can be provided on the shank 57d of collar 14d such that the pin 12a and collar 14d can be gripped by a suitable tool to facilitate threading the assembly together. Upon completion of the swaging operation, the collar flats 67d will have been reformed to a final smooth annular swaged contour and the pull portion 42a with flats 65 will have been removed via fracture at the breakneck 40a; thus the remaining portions of the set fastener will have a configuration which is absent flats or other convenient gripping surfaces whereby removal of the swaged fastener will have been inhibited.

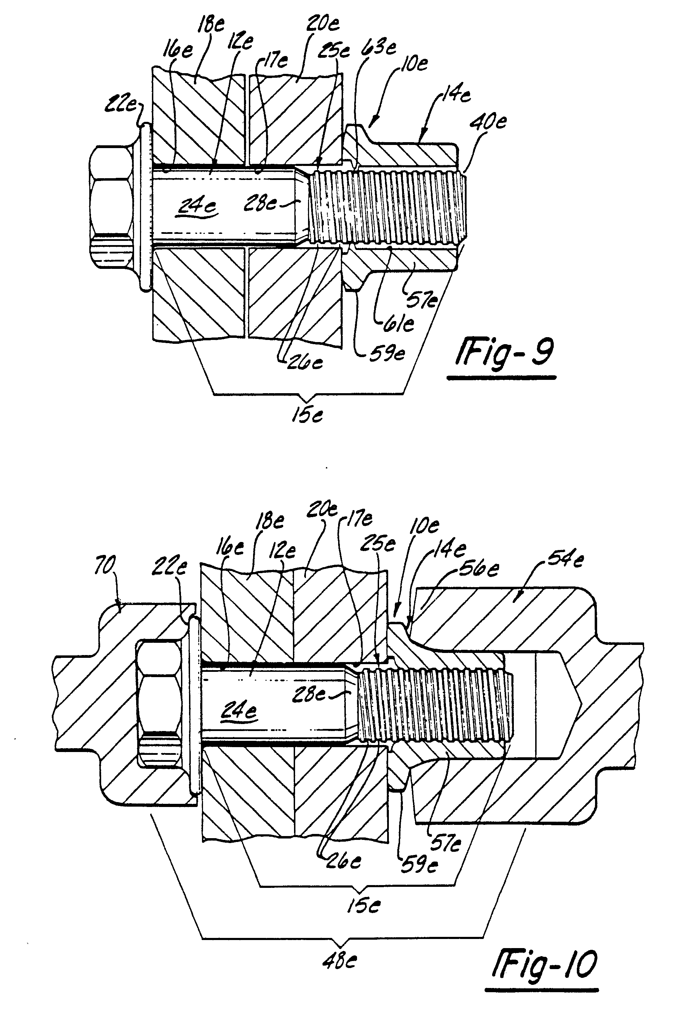

The fastener 10 shown and discussed above is a pull type fastener adapted to be finally installed by a conventional pull type tool 48. The features of the invention, however, are also applicable to a stump type fastener adapted to be finally installed by a squeeze type tool. Thus a stump type fastener is shown in Figures 9 and 10 in which components similar to like components in the embodiments of Figures 1 and 2 have been given the same numeral designation with the addition of the letter postscript «e».

Looking now to Figures 9 and 10, a stump type fastener 10e is shown to include a pin member 12e and tubular collar 14e. Pin member 12e has an elongated shank 15e which extends through aligned openings 16e and 17e in a pair of workpieces 18e and 20e, respectively, to be secured together. An enlarged protruding head 22e at one end of shank 15e engages one side of workpiece 18e. Adjacent the head 22e, the shank 15e has a straight portion 24e which is adapted to be received within aligned bores 16e and 17e with clearance fit. Following the straight portion 24e is a lock groove portion 25e defined by a plurality of grooves 26e having a continuous, helical thread form. A transition portion 28e smoothly connects the locking grooves 26e with straight shank portion 24e.

The tubular collar 14e has a generally straight shank portion 57e terminating in an enlarged flange 59e. Both the pin head 22e and collar flange 59e have wrenching flats to facilitate gripping by a wrench or other suitable tool for applying a relative torque between the pin member 12e and collar 14e. The collar 14e has a limited, female thread 63e formed at the flange end of the bore 61e for threadably engaging the helical lock grooves 26e. The thread 63e is limited and in one form is defined by around a single, 360° thread.

In operation, the workpieces 18e and 20e can be first joined together by the threaded engagement between the limited collar thread 63e and the threaded lock grooves 26e. The wrenching surfaces on the pin head 22e and collar flange 59e facilitate torquing to the desired magnitude or extent of clamp. Next a squeeze type installation tool 48e is applied to the fastener 10e and a relative axial force is applied between the pin 12e and collar 14e via a swage anvil 56e engaging the outer end of the collar 14e and a reaction member 70 adapted to engage the pin head 22e. As the relative axial force increases the limited collar thread 63e will shear or deform sufficiently to permit the collar 14e to move further axially relative to the pin 12e. In this condition the pin 12e and collar 14e will now act as a swage type fastener; the workpieces 18e and 20e are clamped together at a preselected preload by the relative axial force initially applied between the pin 12e and collar 14e and, as the axial force increases, the collar 14e is swaged into the helical lock groove portion 25e completing the swaging operation (see Figure 10).

Note that the contour of the swage cavity of the swage anvil 56e and the contour of the outer end of the collar 14e are such that swaging of the collar 14e into the lock grooves 26e will not start to occur at the lower magnitude of relative axial force required to shear or deform the limited collar thread 63e at the initiation of the swage operation.

The tool 48e can be of a construction of a known type in which the swage anvil 56e and reaction member 70 are located in a generally «C» shaped housing with the anvil 56e and reaction member 70 being moved towards each other when the tool 48e is actuated to apply a relative axial force to squeeze the fastener located in between.

Thus features of the present invention can be utilized with a stump type fastener as well as with a pull type.

Thus a unique fastener has been provided permitting a variation in clamp load on the workpieces being connected while still permitting a high final clamp via a swaged connection between the pin and collar. In one preferred form of the invention, the pin can be provided with shallow helical grooves whereby a high strength construction can be achieved having a desirable high clamp load while at the same time maintaining the integrity of the thread form of the lock groove portion of the pin whereby torque can be applied for additional clamp up or collar removal.

## Claims

1. A fastening arrangement including a fastener for securing workpieces together with a selectively variable clamp with said fastener adapted to be finally installed via a relative axial force applied by an installation tool, said fastener comprising a pin member having an elongated shank terminating at one end in an enlarged pin head, a lock groove portion on said shank including a plurality of helically extending lock grooves defining a thread form, a tubular collar adapted to be located on said pin shank and to be swaged into said lock grooves in response to first preselected magnitude of said relative axial force applicable by the installation tool, said collar having a through bore of a diameter to generally receive said lock grooves in clearance relationship, said collar having a limited female thread formed on said through bore and adapted to threadably engage said thread form defined by said lock grooves, whereby said collar can be torqued onto said lock groove portion to selectively clamp or locate the workpieces relative to each other more or less, said limited collar thread having a preselected strength selected to deform out of said lock grooves in response to a second preselected magnitude of relative axial force applied between said pin member and said collar by the installation tool with said second preselected magnitude being less than said first preselected magnitude.

2. The fastening arrangement of claim 1, with said collar having a flange at one end adapted to engage the confronting surface of one of the workpieces and with said limited collar thread formed generally in radial alignment with said collar flange.

3. The fastening arrangement of claim 1 or 2, with said limited collar thread extending circumferentially for no more than around 360°.

4. The fastening arrangement of claim 1, 2 or 3, with said lock grooves being defined by pin groove portions and pin shoulder portions, said collar after swage having collar groove portions and shoulder portions formed in said collar bore which are complementary to said lock grooves, the axial widths of said pin groove portions and shoulder portions, and said collar groove portions and shoulder portions being preselected in accordance with the relative shear strength of the materials of said pin member and said collar whereby said pin shoulder portions and said collar shoulder portions are adapted to fail in shear generally at the same tensile load applied between said pin member and said collar.

5. The fastening arrangement of claim 4, with said limited collar thread being defined by a limited groove portion and limited shoulder portion with the axial width of said limited groove portion being substantially the same as the axial width of said pin shoulder portion and with the axial width of said limited shoulder portion being substantially the same as the axial width of said pin groove portion.

6. The fastening arrangement of claim 1, 2 or 3, with said collar having collar grooves and shoulders formed as a result of swaging said collar into said lock grooves, said lock grooves comprising a plurality of circumferentially extending pin grooves and associated pin shoulders, said pin grooves being shallow and having a radial depth defined by the relationship of:

$(h/Du) \times 10^2$, where h is said radial depth and Du is the diameter as defined by said pin shoulders and with said depth h selected to be shallow relative to said shoulder diameter Du to provide a result to said relationship of no greater than around 4, said pin member being of a different material and having an ultimate shear strength of a different magnitude from that of said collar with the ratio of the shear strength of said pin member to said collar being such that crushing of said member in swage is substantially avoided, said ratio of ultimate shear strengths of said pin member to said collar being in a range of around 1.8:1 to around 2.4:1 the axial widths of said pin grooves and shoulders and said collar grooves and shoulders being preselected in accordance with the relative shear strengths of said different materials whereby said pin shoulders and the collar shoulders formed in swage are adapted to fail in shear generally at the same tensile load applied between said pin member and said collar.

7. The fastening arrangement of claim 6, wherein said pin grooves are substantially wider than said pin shoulders, said pin grooves having a simulated streamlined root contour being generally defined by a continuous curve.

8. The fastening arrangement of claim 7, with said pin grooves being generally defined by a portion of an ellipse, said ellipse portion being no greater than one half of an ellipse and having a width no less than around 40% of the width of such ellipse along the minor axis.

9. The fastening arrangement of claim 6, 7 or 8, with said limited collar thread being defined by a limited groove portion and limited shoulder portion with the axial width of said groove portion being substantially the same as the axial width of said pin shoulders and the axial width of said limited shoulder portion being substantially the same as the axial width of said pin grooves.

10. The fastening arrangement of claims 1 to 9, in which said shank includes a pull portion located at the opposite end from said pin head, a straight smooth shank portion located adjacent said enlarged pin head, said lock groove portion being located adjacent said straight shank portion, a breakneck groove defining the weakest portion of said pin shank and located between said pull portion and said lock grooves, the through bore of said collar being of a diameter to generally receive both said pull portion and said lock grooves in clearance relationship.

11. The fastening arrangement of any of claims 1 to 10, including wrenching means on said collar and said pin for facilitating torquing of said collar onto said lock groove portion to selectively clamp or locate the workpieces relative to each other more or less.

12. The fastening arrangement of claim 11, with said wrenching means comprising a wrenching surface on at least one of said collar and said pin with said wrenching surface adapted to be removed in response to said collar being swaged onto said pin member.

13. The fastening arrangement of claim 11 or 12, as dependent on claim 10, wherein said second wrenching surface is on said pull portion and is removed upon fracture at said breakneck groove.

14. A method for securing workpieces together with a selectively variable clamp comprising the steps of:

a) forming a pin member to have an elongated shank terminating at one end in an enlarged pin head, said shank formed to have a lock groove portion including a plurality of helically extending lock grooves defining a thread form,

b) forming a tubular collar to have a through bore of a diameter to generally receive said lock grooves in clearance relationship, said collar formed with a limited female thread in said through bore and adapted to threadably engage said thread form defined by said lock grooves, said collar formed to be swaged into said lock grooves in response to a first preselected magnitude of said relative axial force applicable by an installation tool,

c) threadably applying said collar onto said lock groove portion to selectively clamp or locate the workpieces relative to each other more or less,

d) said limited collar thread formed to have a preselected strength selected to deform out of said lock grooves in response to a second preselected magnitude of relative axial force applied between said pin and said collar by the installation tool with said second preselected magnitude being less than said first preselected magnitude, and

e) applying said second preselected magnitude and said first preselected magnitude of relative axial force, in a substantially immediate sequence, to said pin and said collar to first deform said limited collar thread out of said lock grooves, to secondly clamp the workpieces together under a predetermined clamp load and thirdly to swage said collar into said lock grooves.

15. The method of claim 14, with said limited collar thread having a circumferential extent of no greater than around 360°.

16. The method of claim 14 or 15, with said limited collar thread being formed by cold forming.

17. The method of claim 14, 15 or 16, with said lock grooves formed by pin grooves and pin shoulders and with said pin member being formed of a different material having an ultimate shear strength of a different magnitude from that of said collar, the axial widths of said pin grooves and shoulders and said limited collar threads being selected in accordance with the relative shear strengths of said different materials whereby said limited collar thread will fail in shear generally at a tensile load less than that at which said pin shoulders would fail.

**Patentansprüche**

1. Befestigungsanordnung zum Befestigen von Werkstücken aneinander mit einer wahlweise veränderbaren Klemmeinrichtung, mit einem Befestigungselement, das geeignet ist, endgültig mit einer von einem Einbauwerkzeug ausgeübten, relativen axialen Kraft eingebaut zu werden und das einen Zapfen mit einem langgestreckten Schaft besitzt, der am einen Ende in einem verbreiterten Zapfenkopf endet und der einen Verriegelungsnutteil besitzt, der eine Mehrzahl von wendelförmigen Verriegelungsnuten besitzt, die ein Gewinde bilden, ferner mit einer rohrförmigen Hülse, die geeignet ist, auf dem Zapfenschaft positioniert zu werden und unter der Einwirkung der mit dem Einbauwerkzeug ausübbaren, relativen axialen Kraft einer ersten vorgewählten Größe in die Verriegelungsnuten geschmiedet zu werden, wobei die Hülse eine durchgehende Bohrung besitzt, die einen solchen Durchmesser hat, daß sie die Verriegelungsnuten im Spielsitz aufnehmen kann, und ein in der Bohrung angeordnetes begrenztes Innengewinde, das zur Verschraubung mit dem von den Verriegelungsnuten gebildeten Gewinde geeignet ist, so daß die Hülse derart auf dem Verriegelungsnutenteil angezogen werden kann, daß die Werkstücke wahlweise mehr oder weniger fest zusammengespannt oder positioniert werden, wobei das begrenzte Hülsengewinde eine vorgewählte Festigkeit hat, die so gewählt ist, daß es auf Grund einer zwischen von dem Einbauwerkzeug zwischen dem Zapfen und der Hülse zur Einwirkung gebrachten, relativen Axialkraft einer zweiten vorgewählten Größe aus den Verriegelungsnuten heraus verformt wird, wobei die zweite vorgewählte Größe kleiner ist als die erste vorgewählte Größe.

2. Befestigungsanordnung nach Anspruch 1, dadurch gekennzeichnet, daß die Hülse am einen Ende einen Flansch besitzt, der geeignet ist, an der gegenüberliegenden Fläche eines der Werkstücke anzugreifen, und daß das begrenzte Hülsengewinde allgemein so ausgebildet ist, daß es mit dem Hülsenflansch radial fluchtet.

3. Befestigungsanordnung nach Anspruch 1 oder 2, dadurch gekennzeichnet, daß sich das begrenzte Hülsengewinde in Umfangsrichtung über nicht mehr als etwa 360° erstreckt.

4. Befestigungsanordnung nach Anspruch 1, 2 oder 3, dadurch gekennzeichnet, daß die Verriegelungsnuten von Zapfennutteilen und Zapfenschulterteilen begrenzt sind, daß die Hülse nach dem Schmieden Hülsennutteile und Schulterteile besitzt, die in der Hülsenbohrung ausgebildet und zu den Verriegelungsnuten komplementär sind, und daß die axialen Breiten der Nutteile und der Schulterteile des Zapfens und der Nutteile und der Schulterteile der Hülse in Anbetracht der relativen Scherfestigkeit der Werkstoffe des Zapfens und der Hülse so gewählt sind, daß die Schulterteile des Zapfens und die Schulterteile geeignet sind, allgemein unter der Einwirkung derselben zwischen dem Zapfen und der Hülse einwirkenden Zugkraft einen Scherbruch zu erfahren.

5. Befestigungsanordnung nach Anspruch 4, dadurch gekennzeichnet, daß das begrenzte Hülsengewinde von einem begrenzten Nutteil und einem begrenzten Schulterteil gebildet wird, daß der begrenzte Nutteil im wesentlichen dieselbe axiale Breite hat wie der Schulterteil des Zapfens und daß der begrenzte Schulterteil im wesentlichen dieselbe axiale Breite hat wie der Nutteil des Zapfens.

6. Befestigungsanordnung nach Anspruch 1, 2 oder 3, dadurch gekennzeichnet, daß die Hülse durch das Einschmieden der Hülse in die Verriegelungsnut ausgebildete Hülsennuten und -schultern besitzt, daß die Verriegelungsnuten aus einer Mehrzahl von sich in der Umfangsrichtung erstreckenden Zapfennuten und ihnen zugeordneten Zapfenschultern bestehen, daß die Zapfennuten seicht sind und ihre radiale Tiefe durch die Beziehung $(h/Du) \cdot 10^2$ bestimmt ist, in der h die genannte radiale Tiefe und Du der von den Zapfenschultern bestimmte Durchmesser ist, daß die Tiefe h soviel kleiner ist als der Schulterdurchmesser Du, daß die genannte Beziehung nicht größer ist als etwa 4, daß der Zapfen aus einem anderen Werkstoff besteht als die Hülse, daß der Werkstoff des Zapfens eine andere Scherbruchfestigkeit hat als der Werkstoff der Hülse, daß das Verhältnis der Scherfestigkeit des Zapfens zu der der Hülse derart ist, daß ein Quetschen des Zapfens beim Schmieden im wesentlichen vermieden wird, daß das Verhältnis der Scherfestigkeit des Zapfens zu der der Hülse im Bereich von etwa 1,8:1 bis etwa 4,4:1 liegt und daß die axialen Breiten der Zapfennuten und -schultern und der Hülsennuten und -schultern in Anbetracht der relativen Scherfestigkeit der unterschiedlichen Werkstoffe so vorgewählt sind, daß die Zapfenschultern und die beim Schmieden gebildeten Hülsenschultern geeignet sind, allgemein unter derselben zwischen dem Zapfen und der Hülse einwirkenden Zugbelastung einen Scherbruch zu erfahren.

7. Befestigungsanordnung nach Anspruch 6, dadurch gekennzeichnet, daß die Zapfennuten beträchtlich breiter sind als die Zapfenschultern und die Zapfennuten ein stromlinienähnliches Fußprofil haben, das allgemein von einer stetigen Kurve definiert ist.

8. Befestigungsanordnung nach Anspruch 7, dadurch gekennzeichnet, daß die Zapfennuten allgemein von einem Teil einer Ellipse gebildet werden, der nicht größer ist als eine Hälfte einer Ellipse und desen Breite nicht kleiner ist als ungefähr 40% der längs der Nebenachse der Ellipse gemessenen Breite derselben.

9. Befestigungsanordnung nach Anspruch 6, 7 oder 8, dadurch gekennzeichnet, daß das begrenzte Hülsengewinde von einen begrenzten Nutteil und einem begrenzten Schulterteil gebildet wird und daß der begrenzte Nutteil im wesentlichen dieselbe axiale Breite hat wie die Zapfenschultern und der begrenzte Schulterteil im wesentlichen dieselbe axiale Breite hat wie die Zapfennuten.

10. Befestigungsanordnung nach den Ansprüchen 1 bis 9, dadurch gekennzeichnet, daß der Schaft einen an dem dem Zapfenkopf entgegengesetzten Ende angeordneten Ziehteil besitzt, sowie einen im Bereich des verbreiterten Zapfenkopfes angeordneten, geraden Schaftteil, daß der Verriegelungsnutenteil im Bereich des geraden Schaftteils angeordnet ist, und zwischen dem Ziehteil und den Verriegelungsnuten als schwächste Stelle des Zapfenschafts eine eingeschnürte Sollbruchnut zwischen dem Ziehteil und den Verriegelungsnuten angeordnet ist und daß die durchgehende Bohrung der Hülse einen solchen Durchmesser hat, daß sie sowohl den Ziehteil als auch die Verriegelungsnuten allgemein im Spielsitz aufnehmen kann.

11. Befestigungsanordnung nach einem der Ansprüche 1 bis 10, gekennzeichnet durch an der Hülse und an dem Zapfen ausgebildete Mittel für den Angriff eines Schlüssels zum leichteren Anziehen der Hülse auf dem Verriegelungsnutenteil derart, daß die Werkstücke relativ zueinander mehr oder weniger fest miteinander verspannt oder positioniert werden.

12. Befestigungsanordnung nach Anspruch 11, dadurch gekennzeichnet, daß die Mittel für den Angriff eines Schlüssels eine an mindestens einem der aus der Hülse und dem Zapfen bestehenden Teile ausgebildete Schlüsselangriffsfläche besitzt, die durch das Aufschmieden der Hülse auf den Zapfen entfernbar ist.

13. Befestigungsanordnung nach Anspruch 11 oder 12, soweit sie auf den Anspruch 10 rückbezogen sind, dadurch gekennzeichnet, daß die zweite Schlüsselangriffsfläche an dem Ziehteil ausgebildet ist und bei einem Bruch an der Sollbruchnut entfernt wird.

14. Verfahren zum Aneinanderbefestigen von Werkstücken mit einer wahlweise veränderbaren Klemmeinrichtung, mit folgenden Schritten:

a) ein Zapfen wird mit einem langgestreckten Schaft ausgebildet, der am einen Ende in einem verbreiterten Zapfenkopf endet und der mit einem Verriegelungsnutenteil ausgebildet ist, der eine Mehrzahl von wendelförmigen Verriegelungsnuten besitzt, die ein Gewinde bilden,

b) es wird eine rohrförmige Hülse ausgebildet, die eine durchgehende Bohrung besitzt, die einen solchen Durchmesser hat, daß sie die Verriegelungsnuten im Spielsitz aufnehmen kann, und ein in der Bohrung angeordnetes begrenztes Innengewinde, das zur Verschraubung mit dem von den Verriegelungsnuten gebildeten Gewinde geeignet ist, wobei die Hülse geeignet ist, auf Grund einer von einem Einbauwerkzeug ausübbaren relativen Axialkraft einer ersten vorgewählten Größe in die Verriegelungsnuten geschmiedet zu werden,

c) durch Aufschrauben der Hülse auf den Verriegelungsnutenteil werden die Werkstücke mehr oder weniger fest zusammengespannt oder relativ zueinander positioniert,

d) wobei das Hülsengewinde so ausgebildet wird, daß es eine vorgewählte Festigkeit hat, die so gewählt ist, daß es sich unter der Einwirkung einer von dem Einbauwerkzeug ausgeübten, zwischen dem Zapfen und der Hülse wirkenden relativen Axialkraft einer zweiten vorgewählten Größe aus den Verriegelungsnuten heraus verformt, wobei die zweite vorgewählte Größe kleiner ist als der erste vorgewählte Wert, und

e) die relative Axialkraft der zweiten und der ersten vorgewählten Größe in im wesentlichen unmittelbarer Aufeinanderfolge auf den Zapfen und die Hülse zur Einwirkung gebracht werden, so daß zunächst das begrenzte Hülsengewinde aus den Verriegelungsnuten heraus verformt wird, zweitens die Werkstücke unter einer vorherbestimmten Klemmbelastung zusammengespannt werden und drittens die Hülse in die Verriegelungsnuten geschmiedet werden.

15. Verfahren nach Anspruch 14, dadurch gekennzeichnet, daß sich das begrenzte Hülsengewinde in Umfangsrichtung über nicht mehr als etwa 360° erstreckt.

16. Verfahren nach Anspruch 14 oder 15, dadurch gekennzeichnet, daß das begrenzte Hülsengewinde durch Kaltverformung ausgebildet wird.

17. Verfahren nach Anspruch 14, 15 oder 16, dadurch gekennzeichnet, daß die Verriegelungsnuten von Zapfennuten und Zapfenschultern gebildet werden, daß der Zapfen aus einem anderen Werkstoff gebildet wird als die Hülse und der Werkstoff des Zapfens eine andere Scherbruchfestigkeit hat als der Werkstoff der Hülse und daß die axialen Breiten der Zapfennuten und -schultern und des begrenzten Hülsengewindes in Anbetracht der relativen Scherfestigkeiten der verschiedenen Werkstoffe so gewählt werden, daß das begrenzte Hülsengewinde allgemein unter einer geringeren Zugbelastung einen Scherbruch erfährt als die Zapfenschultern.

**Revendications**

1. Un dispositif de fixation comprenant un organe de fixation pour fixer ensemble des pièces avec un serrage sélectivement variable, ledit organe de fixation étant adapté pour être installé finalement par l'intermédiaire d'une force axiale relative exercée par un outil d'installation, ledit organe de fixation comprenant un élément formant broche, pourvu d'une queue allongée se terminant à une extrémité par une tête de broche élargie, une partie à rainures de blocage sur ladite queue, comprenant une pluralité de rainures de blocage s'étendant en hélice et définissant une forme de filetage, une bague tubulaire adaptée pour être positionnée sur ladite queue de broche et pour être refoulée dans lesdites rainures de blocage en réponse à une première grandeur présélectionnée de ladite force axiale relative pouvant être appliquée par l'outil d'installation, ladite bague comportant un trou traversant d'un diamètre permettant de recevoir lesdites rainures de blocage avec du jeu, ladite bague comportant un filetage femelle limité qui est formé dans ledit trou traversant et qui est adapté pour être vissé sur ladite forme de filetage définie par lesdites rainures de blocage, de telle sorte que ladite bague puisse être montée par vissage sur ladite partie à rainures de blocage pour positionner ou serrer sélectivement plus ou moins les pièces l'une par rapport à l'autre, ledit filetage limité de la bague ayant une résistance présélectionnée qui est choisie pour se déformer hors desdites rainures de blocage en réponse à une seconde grandeur présélectionnée de force axiale relative exercée entre ledit élément formant broche et ladite bague par l'outil d'installation, ladite seconde grandeur présélectionnée étant inférieure à ladite première grandeur présélectionnée.

2. Le dispositif de fixation selon la revendication 1, où ladite bague comporte à une extrémité une collerette adaptée pour s'appliquer contre la surface correspondante d'une des pièces et où ledit filetage limité de la bague est formé dans l'ensemble en alignement radial avec ladite collerette de bague.

3. Le dispositif de fixation selon une des revendications 1 ou 2, où ledit filetage limité de la bague s'étend circonférentiellement sur pas plus d'environ 360°.

4. Le dispositif de fixation selon une des revendications 1, 2 ou 3, où lesdites rainures de blocage sont définies par des parties de rainures de broche et des parties d'épaulements de broche, ladite bague comportant, après refoulement, des parties de rainure et des parties d'épaulement de bague qui sont formée dans ledit trou de la bague qui sont complémentaires desdites rainures de blocage, les largeurs axiales desdites parties de rainure et parties d'épaulement de broche ainsi que les parties de rainure et les parties d'épaulement de bague étant présélectionnées en concordance avec la résistance relative au cisaillement des matières dudit élément formant broche et de ladite bague afin que lesdites parties d'épaulement de broche et lesdites parties d'épaulement de bague soient adaptées pour se rompre au cisaillement généralement pour la même charge de tension qui est exercée entre ledit élément formant broche et ladite bague.

5. Le dispositif de fixation selon la revendication 4, où ledit filetage limité de la bague est défini par une partie de rainure limitée et une partie d'épaulement limitée, la largeur axiale de ladite partie de rainure limitée étant sensiblement la même que la largeur axiale de ladite partie d'épaulement de broche tandis que la largeur axiale de ladite partie d'épaulement limitée est sensiblement la même que la largeur axiale de ladite partie de rainure de broche.

6. Le dispositif de fixation selon une des revendications 1, 2 où 3, où ladite bague comporte des rainures et des épaulements de bague qui sont formés en résultat du refoulement de ladite bague dans lesdites rainures de blocage, lesdites rainures de blocage comprenant une pluralité de rainures de broche et d'épaulements de broche associés s'étendant circonférentiellement, lesdites rainures de broche étant peu profondes et ayant une profondeur radiale par la relation:

$(h/Du) \times 10^2$, où h désigne la profondeur radiale et Du désigne le diamètre qui est défini par lesdits épaulements de broche, et ladite profondeur h étant choisie de manière à être petite par rapport audit diamètre d'épaulement Du de façon à obtenir pour ladite relation un résultat non supérieur à environ 4, ledit élément formant broche étant constitué d'un matériau différent et ayant une résistance finale au cisaillement d'une grandeur différente de celle de ladite bague, le rapport entre les résistances au cisaillement dudit élément formant broche et de ladite bague étant tel qu'on évite pratiquement un écrasement dudit élément formant broche lors du refoulement, ledit rapport entre les résistances finales au cisaillement dudit élément formant broche et de ladite bague rentrant dans une gamme comprise entre environ 1,8:1 et environ 2,4:1, les largeurs axiales desdites rainures et épaulements de broche et desdites rainures et épaulements de bague étant présélectionnées en concordance avec les résistances relatives au cisaillement desdits matériaux différents de telle sorte que lesdits épaulements de broche et lesdits épaulements de bague formés lors du refoulement soient adaptés pour se rompre au cisaillement généralement pour la même charge de tension exercée entre ledit élément formant broche et ladite bague.

7. Le dispositif de fixation selon la revendication 6, dans lequel lesdites rainures de broche sont sensiblement plus larges que lesdits épaulements de broche, lesdites rainures de broche ayant un contour de base de profil aérodynamique simulé qui est défini dans l'ensemble par une courbe continue.

8. Le dispositif de fixation selon la revendication 7, où lesdites rainures de broche sont définies dans l'ensemble par une partie d'une ellipse, ladite partie d'ellipse n'étant pas plus grande que la moitié d'une ellipse et ayant une largeur non inférieure à environ 40% de la largeur de ladite ellipse le long du petit axe.

9. Le dispositif de fixation selon une des revendications 6, 7 ou 8, où ledit filetage limité de la bague est défini par une partie de rainure limitée et par une partie d'épaulement limitée, la largeur axiale de ladite partie de rainure limitée étant sensiblement la même que la largeur axiale desdits épaulements de broche tandis que la largeur axiale de ladite partie d'épaulement limitée est sensiblement la même que la largeur axiale desdites rainures de broche.

10. Le dispositif de fixation selon une des revendications 1 à 9, dans lequel ladite queue comprend une partie de traction qui est placée à l'extrémité opposée à ladite tête de broche, une partie de queue lisse et droite qui est placée adjacente à ladite tête élargie de broche, ladite partie à rainures de blocage étant placée adjacente à ladite partie de queue droite, une rainure formant col de rupture définissant la partie la plus faible de ladite queue de broche et étant placée entre ladite partie de traction et lesdites rainures de blocage, le trou traversant de ladite bague ayant un diamètre lui permettant de recevoir généralement avec du jeu à la fois ladite partie de traction et lesdites rainures de blocage.

11. Le dispositif de fixation selon une quelconque des revendications 1 à 10, comprenant des moyens de torsion sur ladite bague et sur ladite broche pour faciliter le montage par vissage de ladite bague sur ladite partie à rainures de blocage afin de positionner ou serrer sélectivement plus ou moins les pièces l'une par rapport à l'autre.

12. Le dispositif de fixation selon la revendication 11, où lesdits moyens de torsion comprennent une surface de torsion prévue sur au moins un des éléments constitués par ladite bague et ladite broche, ladite surface de torsion étant adaptée pour être enlevée en réponse au refoulement de ladite bague dans ledit élément formant broche.

13. Le dispositif de fixation selon une des revendications 11 ou 12, en dépendance de la revendication 10, dans lequel ladite seconde surface de torsion est située sur la partie de traction et est enlevée lors de la rupture dans ladite rainure formant col de rupture.

14. Un procédé de fixation de pièces ensemble avec un serrage sélectivement variable, comprenant les étapes consistant à:

a) réaliser un élément formant broche de façon qu'il comporte une queue allongée se terminant à une extrémité par une tête élargie de broche, ladite queue étant profilée de façon à comporter une partie à rainures de blocage comportant une pluralité de rainures de blocage s'étendant en hélice et définissant une forme de filetage,

b) réaliser une bague tubulaire de manière qu'elle comporte un trou traversant d'un diamètre lui permettant de recevoir avec du jeu lesdites rainures de blocage, ladite bague étant pourvue d'un filetage femelle limité dans ledit trou traversant et étant adaptée pour être montée par vissage sur ladite forme de filetage définie par lesdites rainures de blocage, ladite bague étant agencée pour être refoulée dans lesdites rainures de blocage en réponse à une première grandeur présélectionnée de ladite force axiale relative pouvant être exercée par un outil d'installation,

c) monter par vissage ladite bague sur ladite partie à rainures de blocage pour positionner ou serrer sélectivement plus ou moins les pièces l'une par rapport à l'autre,

d) former ledit filetage limité de bague de manière qu'il ait une résistance présélectionnée et choisie pour se déformer hors desdites rainures de blocage en réponse à une seconde grandeur présélectionnée de force axiale relative exercée entre ladite broche et ladite bague par l'outil d'installation, ladite seconde grandeur présélectionnée étant inférieure à ladite première longueur présélectionnée,

e) appliquer ladite seconde grandeur présélectionnée et ladite première grandeur présélectionnée de force axiale relative, dans une séquence sensiblement immédiate, à ladite broche et à ladite bague en premier lieu pour déformer ledit filetage limité de bague hors desdites rainures de biocage, en second lieu pour serrer les pièces ensemble sous une charge de serrage prédéterminée et en troisième lieu pour refouler ladite bague dans lesdites rainures de blocage.

15. Le procédé selon la revendication 14, où ledit filetage limité de la bague a une étendue circonférentielle non supérieure à environ 360°.

16. Le procédé selon une des revendications 14 ou 15, où ledit filetage limité de la bague est réalisé par formage à froid.

17. Le procédé selon une des revendications 14, 15 ou 16, où lesdites rainures de blocage sont formées par des rainures de broche et des épaulements de broche et où ledit élément formant broche est constitué d'un matériau différent ayant une résistance finale au cisaillement d'une grandeur différente de celle de ladite bague, les largeurs axiales desdites rainures et desdits épaulements de broche et ledit filetage limité de bague étant choisis en concordance avec les résistances relatives au cisaillement desdits matériaux différents de telle sorte que ledit filetage limité de bague se rompe au cisaillement généralement pour une charge de tension inférieure à celle pour laquelle se rompraient lesdits épaulements de broche.

**Fig-1**

**Fig-2**

28a  12a  67  25a  26a  40a  44a

24a

60a

65

42a

_Fig-3_

22b  12b

_Fig-4_

22c  12c

_Fig-5_

69  57  14  61

63  59

_Fig-6_

14d  61d  67d  57d  67d

63d  59d

_Fig-7_

_Fig-8_

EP 0 221 143 B1

IFig-9

IFig-10